# EUROPEAN PATENT APPLICATION

(11) **EP 2 756 977 A1**
(43) Date of publication of application: **23.07.2014**
(21) Application number: 14164820.4
(22) Date of filing: 21.04.2010
(51) Int. Cl.: B60K 15/03, B29C 49/20, B60K 15/035

(54) **Plastic fuel tank with improved creep resistance and method for the manufacture thereof**

(30) Priority: 23.04.2009 FR 0952651
(62) Divisional of application: 10714015.4
(71) Applicant: Inergy Automotive Systems Research (Société Anonyme), 1120 Bruxelles (BE)
(72) Inventor: Criel, Bjorn, 1750 SINT-MARTENS-LENNIK (BE); Cuvelier, Vincent, 430056 WUHAN (CN)
(74) Representative: Remy, Vincent Noel Paul

(57) **Abstract**

Plastic fuel tank having a lower wall, an upper wall and at least one reinforcing element (3) connecting these two walls, this reinforcing element (3) comprising a hollow plastic pillar (3) having an opening in its lower part (1) and an opening in its upper part (2), these openings (1,2) being situated at locations such that they allow, respectively, the filling of the pillar (3) and the degassing thereof.

## Description

The present invention relates to a plastic fuel tank with improved creep resistance and a method for the manufacture thereof.

Plastic fuel tanks intended for motor vehicles have to meet specifications that specify maximum permissible amplitudes of deflection on their lower skin. The deflections stated in these specifications usually have to be met during ageing tests in which the tank contains a certain quantity of fuel for a given period of time (typically several weeks) and at temperature (usually 40°C). The purpose of these specifications is to ensure that vehicles maintain their road clearance and to prevent the skin of the tank from coming into contact with hotspots of the vehicle.

At the present time, plastic fuel tanks are generally fixed to the chassis of the vehicle via plastic lugs and are supported by metal straps. The latter are used in particular on the more capacious tanks where compliance with maximum permissible deflections is more difficult. However, recourse to these straps involves an additional attachment step and is therefore not very economical.

Moreover, hybrid vehicles and particularly cars operating in electric mode only, are characterized by a significant reduction of the volumes of air for purging the canister. In the context of the development of fuel systems for applications of this type, a pressurization of the tank is envisaged, since the generation of petrol vapours decreases as a function of the pressure. At pressures of 350 to 450 mbar, vapour generation is almost eliminated. Thus the canister is no longer affected by changes in the surrounding temperature. On the other hand, the mechanical strength/creep resistance of the tank must be increased since the deformations resulting from the pressurization are added to the deformations induced by the weight of the fuel.

Solutions have been proposed in the prior art with a view to enhancing the mechanical strength (including the creep resistance) of fuel tanks.

Thus, Application WO 2006/064004 in the name of the Applicant describes a method for manufacturing a plastic fuel tank with improved creep resistance, according to which:
a) a plastic parison comprising two distinct parts is inserted into an open two-cavity mould;
b) a core is inserted inside the parison, said core bearing at least part of a reinforcing element capable of securing (creating a link between) the two parts of the parison;
c) the parison is pressed firmly against the mould cavities (by blowing through the core and/or creating suction behind the cavities);
d) (the part of) the reinforcing element is fixed to at least one of the parts of the parison using the core;
e) the core is withdrawn;
f) the mould is closed again, bringing its two cavities together in such a way as to grip the two parts of the parison around their periphery in order to weld them together;
g) a pressurized fluid is injected into the mould and/or a vacuum is created behind the mould cavities in order to press the parison firmly against the mould cavities;
h) the mould is opened and the tank is extracted.

In this application, it is specified that the reinforcing element may be any functional device or object generally associated with the fuel tank in its normal use or operation and which is voluminous enough to extend from one wall to the other. An example of such a structure which is particularly suitable is the tank pump/gauge module. However, in flat tanks that extend over a large surface area, and/or in certain "saddle" tanks (that comprise at least two pockets), a single reinforcing element is not generally sufficient. Moreover, depending on the geometry of the tank, it may be that the module is situated at a location where a reinforcement is not necessary or even possible. It is then necessary to provide other reinforcement(s) in the tank, which has the effect of reducing the working volume of the tank and/or of increasing the weight thereof. This reinforcement may be, for example, a reinforcement of the "kiss-off" type in conventional blow moulding (i.e. a local weld of the lower and upper walls of the tank) or an internal reinforcement in twin-sheet blow moulding. These reinforcements involve an additional cost and a reduction in the internal working volume of the tank.

The present invention aims at solving these problems by providing a reinforced tank of particularly simple structure, where the reinforcing element does not significantly reduce the working volume of the tank and does not increase too much the weight thereof, but on the contrary is a constitutive element of an accessory that has an active role in the tank, such as a degassing, gauging or fuel trap role.

For this purpose, the invention relates to a plastic fuel tank having a lower wall, an upper wall and at least one reinforcing element connecting these two walls, in which the reinforcing element comprises a hollow plastic pillar having an opening in its lower part and an opening in its upper part, these openings being situated at locations such that they allow, respectively, the filling of the pillar and the degassing thereof.

In a particular embodiment, at least one part of the hollow pillar is a constitutive element of an accessory that has an active role in the tank.

The term "fuel tank" is understood to mean an impermeable tank that can store fuel under diverse and varied environmental and usage conditions. An example of this tank is that with which motor vehicles are equipped.

The fuel tank according to the invention is made of plastic, that is to say made of a material comprising at least one synthetic resin polymer.

All types of plastic may be suitable. Particularly suitable are plastics that belong to the category of thermoplastics.

The term "thermoplastic" is understood to mean any thermoplastic polymer, including thermoplastic elastomers, and blends thereof. The term "polymer" is understood to mean both homopolymers and copolymers (especially binary or ternary copolymers). Examples of such copolymers are, non-limitingly: random copolymers, linear block copolymers, other block copolymers and graft copolymers.

One polymer often employed is polyethylene. Excellent results have been obtained with high-density polyethylene (HDPE). Preferably, the tank also comprises a layer of a fuel-impermeable resin such as, for example, EVOH (a partially hydrolysed ethylene/vinyl acetate copolymer). Alternatively, the tank may be subjected to a surface treatment (fluorination or sulphonation) for the purpose of making it impermeable to the fuel.

The tank according to the invention comprises a reinforcing element which connects its lower wall (the one mounted facing downwards in the vehicle and which is likely to creep under the weight of the fuel) to its upper wall (the one mounted facing upwards and subject to little or no creep during use).

This element is by definition rigid, i.e. over the life of the tank it does not deform by more than a few mm, ideally it deforms by less than 1 mm.

According to the invention, this element has the shape of a hollow pillar, i.e. a hollow body (wall delimiting an internal volume that is not filled with the constitutive material thereof) of generally cylindrical shape, having a cross section that optionally varies over its length, and the wall thickness of which represents a negligible percentage of its total volume (typically from 0.2% to 0.5%). Preferably, it is a pillar in the architectural sense of the term, i.e. a cylindrical structure having larger cross sections at its ends and smaller cross sections at its centre (in other words: a cross section that decreases from its ends to its centre).

According to the invention, the pillar comprises a lower opening that enables it to be filled with fuel and an upper opening that enables it to be degassed preferably over substantially the entire range of fill levels of the tank. Preferably, the lower opening is situated as close as possible to the lower wall of the tank (taking into account manufacturing constraints and the dimension required in order for it to be effective). Similarly, preferably, the upper opening is situated above the maximum fill level of the tank, more preferably as close as possible to the upper wall of the tank (taking into account manufacturing and operating constraints, and also the dimension required in order for it to be effective).

As mentioned in the former paragraph, the dimensions and shapes of these orifices are preferably adapted so that they can effectively fulfil their role. The shape is preferably substantially circular (generally easier to produce in practice), but other shapes do not particularly pose problems.

As regards the dimensions, they are preferably such that:
- the filling is carried out with sufficient dynamics (without creating too much pressure drop). Orifices having a diameter of the order of 5 mm to 10 mm are very suitable.
- the degassing does not cause a pressure drop greater than that of the filling orifice. In practice, a diameter of 10 to 15 mm is very suitable.

The aforementioned reinforcing pillar is based on any fuel-resistant plastic and, if the reinforcement is welded to the tank, it is preferably based on a plastic compatible with that of the tank (at least at the surface).

Virgin HDPE or HDPE filled with glass fibres or any other type of filler (natural or polymeric fibres), POM, PEEK, etc. may be suitable. Preferably, they are plastic pillars manufactured by injection moulding. It may also be a two-material pillar, one part of which is made of a material compatible with HDPE and another part of which is made of a material having limited deformation and/or creep (POM, PA, PEEK, metal, etc.).

According to the invention, at least one part of the hollow pillar is a constitutive element of an accessory that has an active role in the tank (degassing, gauging, fuel trap, etc). Generally, the accessory in question includes at least one active component present in a chamber/housing, and preferably at least one part of the hollow pillar constitutes, in this case, at least one part of said housing. In other words: the wall of the hollow pillar preferably constitutes at least one part of the housing of the accessory.

According to a first advantageous variant of the invention, the hollow pillar comprises, in its internal volume, at least one part of a ventilation system that connects the inside of the tank to the outside, generally via a canister or another pollution-control device. This part may comprise one or more components of the ventilation system. In other words, in this variant, the accessory of which the hollow pillar is a constitutive element, is part of the ventilation system of the tank.

In a preferred subvariant, it is a liquid/vapour separator (or LVS) i.e. a hollow volume having an internal geometry such that it favours the abatement of the drops of vapour present in the fuel vapours. This separator advantageously comprises a drainage device which may be passive (i.e. which allows the liquid trapped to flow by gravity, such as a valve (umbrella, ROV or FLVV valve) for example) or active (i.e. a low point connected to pump suction). It generally also comprises an abatement relief such as a set of baffles constituting a chicane. In this subvariant, one part of the wall of the hollow pillar advantageously constitutes the side wall of the LVS. In other words, in this variant, the LVS is delimited by a chamber having a side wall constituted by at least one part of a side wall of the pillar.

In another preferred subvariant, the accessory is an ROV and/or FLVV type valve and the active component integrated into the pillar is a float. In this case, at least one part of the hollow pillar constitutes the chamber in which the float slides.

In these two subvariants, the separator and the valve are generally connected to at least one ventilation line.

According to a second advantageous variant of the invention, the hollow pillar acts as a housing for an overfill prevention device (OPD). In this variant, at least one part of the hollow pillar constitutes the chamber in which the OPD is located. Various ROVs may then be connected at the inlet to this OPD device.

In one preferred subvariant, it is possible to combine the LVS function and the OPD function in the pillar.

According to a third advantageous variant of the invention, the hollow pillar acts as a fuel trap (in other words: the accessory is a fuel trap) and, for this purpose, comprises in its internal volume at least one suction point for a fuel pump and very particularly preferably, a filter through which the pump sucks up.

According to a fourth advantageous variant of the invention, the hollow pillar comprises a capacitive gauge and acts as a protective chamber for the latter (i.e. constitutes its protective housing as it were). Its functions are in this case:
- to filter the effects of the waves (due to the movement of the fuel) and thus to reduce the fuel level measurement noise;
- to protect the measurement element from parasitic capacitances (by means of a choice of material for this purpose); and
- to reduce the effect of a film of fuel which is deposited on the sensitive element.
It should be noted that the various aforementioned variants may be combined within one and the same tank, or even: within one and the same pillar.

The present invention also relates to a process for manufacturing a tank as described above.

Generally, the tank is a plastic tank obtained by extrusion-blow moulding a tubular parison (optionally cut into two flattened parts in order to make sorts of sheets therefrom), or by thermoforming two sheets, these processes generally requiring a two-cavity mould, the internal shape of which, when the cavities are brought together, corresponds substantially to the external shape of the tank. Generally, a suitable device makes it possible to apply the vacuum between the parison (or the sheets) and the cavities so as to keep the parison in the mould, or even to assist the moulding.

In a first variant, once the tank has been demoulded and cooled, a cut is made in it, in order to obtain an opening through which the hollow pillar is introduced into the tank and is secured to an attachment relief present at the internal surface of the tank, preferably both on its lower wall and on its upper wall. Any type of relief may be suitable for this purpose. In particular, a dovetail relief on each wall into which the ends of the pillar are slid is very suitable. Such a relief is for example described in Patent EP 875 411 in the name of the Applicant, the content of which is, for this purpose, incorporated by reference into the present application.

In a second variant, sheets (optionally resulting from cutting a tubular parison) are moulded in a mould which comprises, beside the cavities described above, a core that makes it possible to attach the pillar, or an attachment structure for this pillar, to the (upper and lower) walls of the tank during the moulding of said tank and, in particular, during step d) of a process as described in the aforementioned international application.

The term "core" is understood to mean a part of a size and a shape suitable for being inserted between the mould cavities and preventing them from being welded together during steps b) to d) of a process as described in the aforementioned international application. Such a part is described, for example, in Patent GB 1,410,215, the content of which is, for this purpose, introduced by reference into the present application.

The core may also be used to blow a pressurized gas into the mould in order to press the parison firmly against the mould cavities during step c) of a process as described above, and to attach most of the internal components in the tank.

In a first subvariant, the pillar is split into two parts that are each provided with a clip (or with another relief enabling a quick coupling) and that are attached (by welding or rivet punching) on both sides to the parison using the core, but without clip-fastening them. In this case, either the shrinkage of the tank after demoulding is sufficient for the two parts to clip-fasten themselves or else an external pressure is applied (manually or via a machine) to the walls of the tank to perform/enhance the clip-fastening.

In a second subvariant, the pillar is a single part and it is attached to the parison by welding on both sides inside the parison. However, this variant is less advantageous, since the post-moulding shrinkage is liable to introduce stresses at the points of attachment of the pillar to the tank. In the case of a welded attachment, the core is advantageously provided with a ram comprising a heating element (mirror, filament, etc.) that allows the second end (the one attached second) of the reinforcing element to be kept hot while the 1^{st} one is being welded.

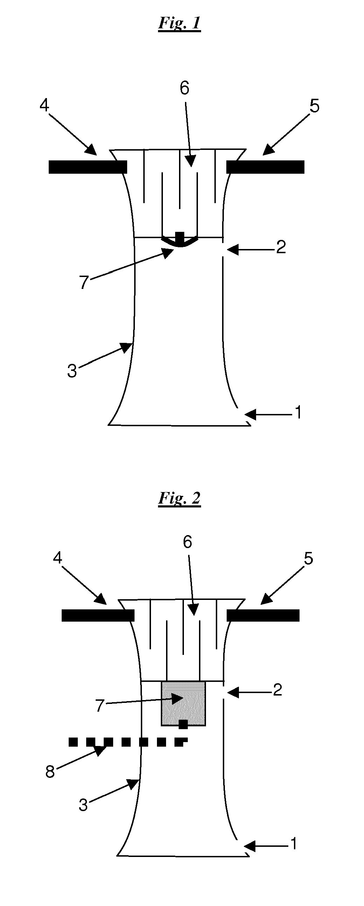

The objective of Figures 1 to 4 is to illustrate certain concrete aspects of the invention, without wishing to restrict the scope thereof in any way.

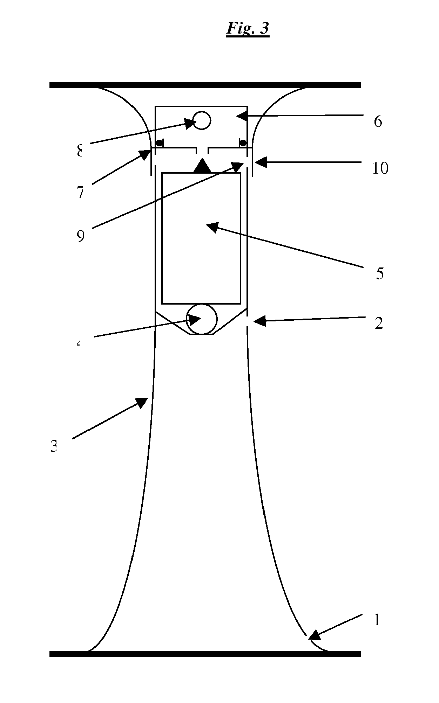

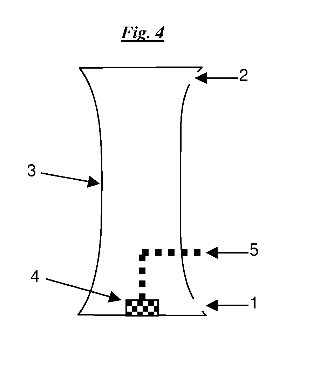

Figure 1 illustrates a hollow pillar that integrates a liquid/vapour separator with passive drainage; Figure 2 illustrates a hollow pillar that integrates a liquid/vapour separator with active drainage; Figure 3 illustrates a hollow pillar that acts as the body of a ventilation valve; and Figure 4 illustrates a hollow pillar that carries out a fuel trap role.

In the figures, the numbers 1 to 3 denote identical components, namely: a filling hole (1) and a degassing hole (2) for a hollow pillar (3) intended to serve as a reinforcing element in a fuel tank (by attaching its ends respectively to the lower wall and to the upper wall of the tank as explained above).

Seen in Figure 1 is a hollow pillar (3) provided with a ventilation line that has an inlet (4) and an outlet (5) opening into a liquid/vapour separator (6) equipped with baffles and with an umbrella valve (7) that enables the separator (6) to be drained when the weight of liquid stopped by the baffles reaches a certain value. This ventilation line is intended to be coupled to a canister of a fuel tank (neither of which are represented).

The pillar variant represented in Figure 2 also comprises a ventilation line (4, 5) and a liquid/vapour separator (6) equipped with baffles, but the umbrella valve has been replaced by a valve (7) that carries out an ROV (Roll Over Valve) and/or FLVV (Fill Limit Vent Valve) function, and by a line (8) connected to pump suction (not represented) allowing the active drainage of the separator (i.e. the drainage thereof as soon as the pump operates, independently of the height (weight) of liquid in the separator).

It should be noted that the variants from Figures 1 and 2 may be "mixed up" in order to relate, for example, to a passive liquid/vapour separator, the drainage orifice of which is protected by an ROV valve rather than by an umbrella diaphragm.

The pillar variant represented in Figure 3 in fact constitutes the body of an ROV and/or FLVV valve that is well known to a person skilled in the art and that comprises the conventional elements of such a valve, namely: an ROV ball (4); a float (5); an upper part (6) attached to the lower part of the pillar (3) using an O-ring (7), into which a ventilation pipe (8) opens and which communicates with the inside of the tank (not represented) via a ventilation orifice (9); and finally: an upper part (10) of the pillar which is situated opposite the orifice (9) in order to prevent liquid fuel entering via this orifice in the event of waves in particular. It should be noted that the ball (4) can be replaced by any other element that provides a roll-over function (ball or spring).

The variant illustrated in Figure 4 comprises a pre-filter (4) through which a fuel feed pump (not represented) can suck via a suction line (5), the pillar thus functioning as a fuel trap for the pump.

## Claims

1. - Plastic fuel tank having a lower wall, an upper wall and at least one reinforcing element connecting these two walls, **characterized in that** the reinforcing element comprises a hollow plastic pillar having an opening in its lower part and an opening in its upper part, these openings being situated at locations such that they allow, respectively, the filling of the pillar and the degassing thereof.

2. - Tank according to the preceding claim, **characterized in that** the hollow pillar is a cylindrical structure comprising a centre that has a given cross section and two ends on both sides of this centre that have larger cross sections.

3. - Tank according to Claim 1 or 2, **characterized in that** the lower opening is situated as close as possible to the lower wall of the tank and **in that** the upper opening is situated above the maximum fill level of the tank.

4. - Tank according to any one of the preceding claims, **characterized in that** the accessory comprises at least one active component situated in a chamber and **in that** at least one part of the hollow pillar constitutes at least one part of this chamber.

5. - Tank according to the preceding claim, **characterized in that** the accessory is a liquid/vapour separator (or LVS) delimited by a chamber having a side wall constituted by at least one part of a side wall of the pillar.

6. - Tank according to Claim 4, **characterized in that** the accessory is an ROV and/or FLVV type valve and the active component integrated into the pillar is a float, at least one part of the hollow pillar constituting the chamber in which the float slides.

7. - Tank according to Claim 4, **characterized in that** the accessory is a fuel trap.

8. - Tank according to Claim 4, **characterized in that** the accessory is an overfill prevention device.

9. - Tank according to Claim 4, **characterized in that** the accessory is a capacitive gauge.

10. - Method for manufacturing a tank according to any one of the preceding claims, **characterized in that** the tank is moulded from a molten plastic parison or molten plastic sheets; **in that** a cut is made in the demoulded and cooled tank, in order to obtain an opening through which the pillar is introduced; and **in that** the pillar is secured to a relief present at the internal surface of the tank, both on its lower wall and on its upper wall.

11. - Method for manufacturing a tank according to any one of Claims 1 to 9, **characterized in that** molten plastic sheets (optionally resulting from cutting a tubular parison) are moulded in a mould comprising cavities and a core, and **in that** the pillar, or at least one part of an attachment structure for this pillar, is attached to the (upper and lower) walls of the tank during the moulding thereof using the core.

12. - Method according to the preceding claim, **characterized in that** the pillar comprises two parts each equipped with a relief enabling a quick coupling together; **in that** these parts are attached (by welding or rivet punching) on both sides to the parison using the core, but without clip-fastening them; and **in that** shrinkage of the tank after demoulding is sufficient for the two parts to clip-fasten themselves and/or an external pressure is applied (manually or via a machine) to the walls of the tank once the latter has been demoulded, in order to perform/enhance the clip-fastening.

13. - Method according to Claim 11, **characterized in that** the pillar is a single part and **in that** it is attached to the parison by welding.

14. - Tank according to Claim 1, **characterized in that** at least one part of the hollow pillar is a constitutive element of an accessory that has an active role in the tank.
